# EUROPÄISCHE PATENTANMELDUNG

(11) **EP 4 148 307 A1**
(43) Veröffentlichungstag der Anmeldung: **15.03.2023**
(21) Anmeldenummer: 21196120.6
(22) Anmeldetag: 10.09.2021
(51) Int. Cl.: F16K 11/07, F16K 27/04

(54) **PROPORTIONALVENTIL**

(71) Anmelder: Bibus Hydraulik AG, 8320 Fehraltorf (CH)
(72) Erfinder: Keller, Urban, 8716 Schmerikon (CH); Germann, Niklaus, 8344 Bäretswil (CH)
(74) Vertreter: Troesch Scheidegger Werner AG

(57) **Zusammenfassung**

Ein Proportionalventil mit einem Gehäuse (1) mit mindestens einem Einlass (6) und mindestens einem Auslass (7;8) und mit einem Ventilkolben (2), welcher sich entlang einer zweiten Längsachse (L2) erstreckt, wobei der mindestens eine Einlass (6) durch ein entsprechendes Positionieren des Ventilkolbens (2) fluidtechnisch mit dem mindestens einen Auslass (7;8) verbindbar ist oder wobei der Ventilkolben (2) deren Verbindung unterbrechen kann, wobei im Gehäuse (1) eine Verteilhülsenbohrung (10) vorgesehen ist, welche sich entlang einer ersten Längsachse (L1) erstreckt und in welcher passend eine Verteilhülse (3) angeordnet ist, in welcher Verteilhülse (3) eine Ventilkolbenbohrung (30) vorgesehen ist, in welcher der Ventilkolben (2) passend angeordnet und darin axial verschiebbar ist, und wobei die erste Längsachse (L1) parallel zur zweiten Längsachse (L2) ausgebildet ist.

## Beschreibung

### TECHNISCHES GEBIET

Die vorliegende Erfindung betrifft ein Proportionalventil, insbesondere mit einem axial verschiebbaren Ventilkolben.

### STAND DER TECHNIK

Aus dem Stand der Technik sind Proportionalventile bekannt, bei welchen ein Ventilkolben in einer Kolbenbohrung in einem Gehäuse axial verschiebbar angeordnet ist. Hohe Durchflussraten durch ein solches Ventil und hohe Druckabfälle über ein solches Ventil, führen zu Kavitationserscheinungen. Um einen zuverlässigen Betrieb eines solchen Ventils zu gewährleisten, müssen die durch Kavitation beschädigten Bauteile ersetzt werden. Meist wird in einer Anlage das ganze Ventil ersetzt, was zu hohen Unterhaltskosten führt.

### BESCHREIBUNG DER ERFINDUNG

Eine Aufgabe der vorliegenden Erfindung besteht darin, ein Proportionalventil bereitzustellen, welches weniger kavitationsanfällig ist und welches günstiger im Unterhalt ist.

Diese Aufgabe wird durch ein Proportionalventil mit den Merkmalen des Anspruchs 1 gelöst. Weitere Ausführungsformen des Proportionalventils, sind durch die Merkmale von weiteren Ansprüchen definiert.

Ein erfindungsgemässes Proportionalventil umfasst ein Gehäuse mit mindestens einem Einlass und mindestens einem Auslass und mit einem Ventilkolben, welcher sich entlang einer zweiten Längsachse erstreckt. Der mindestens eine Einlass ist durch ein entsprechendes Positionieren des Ventilkolbens fluidtechnisch mit dem mindestens einen Auslass verbindbar oder der Ventilkolben kann deren Verbindung unterbrechen. Im Gehäuse ist eine Verteilhülsenbohrung vorgesehen, welche sich entlang einer ersten Längsachse erstreckt und in welcher passend eine Verteilhülse angeordnet ist. In der Verteilhülse ist eine Ventilkolbenbohrung vorgesehen, in welcher der Ventilkolben passend angeordnet und darin axial verschiebbar ist. Die erste Längsachse der Verteilhülsenbohrung ist parallel zur zweiten Längsachse des Ventilkolbens ausgebildet.

Ein solches Proportionalventil kann auch zwei oder mehr Einlässe und/oder zwei oder mehr Auslässe aufweisen. Üblicherweise haben die Ventilkolben kreisförmige Querschnitte. Es ist jedoch auch denkbar, dass Ventilkolben und dementsprechend auch Verteilhülsen verwendet werden, welche keine kreisförmigen Querschnitte aufweisen. Beispielsweise können die Querschnitte oval, tropfenförmig oder mehreckig ausgebildet sein.

Ein erfindungsgemässes Proportionalventil hat den Vorteil, dass wenn Kavitation entsteht, die entsprechenden Schäden an der Verteilhülse entstehen und somit nur diese ausgewechselt werden muss. Zudem kann für das Gehäuse ein Material verwendet werden, welches weniger kavitationsbeständig ist, wodurch die Kosten für das Gehäuse geringer ausfallen. Beispielsweise kann für das Gehäuse GGG40 oder GGG50 verwendet werden. Für die Verteilhülse kann ein kavitationsbeständiges Material, wie beispielsweise legierter Vergütungsstahl, wie beispielsweise 42CrMo4 verwendet werden. Für den Ventilkolben kann verschleissbeständiges Material, wie beispielsweise legierter Einsatzstahl, wie beispielsweise 16MnCr5, 16MnCrS5 oder 1.4125 verwendet werden.

In einer Ausführungsform ist die erste Längsachse der Verteilhülsenbohrung kollinear mit der zweiten Längsachse des Ventilkolbens ausgebildet. Dies führt zu einer konzentrischen Anordnung des Ventilkolbens in der Verteilhülse. Dementsprechend ist die Verteilhülse im Wesentlichen rotationssymmetrisch ausgebildet, was ein Einsetzen im Gehäuse mit einer beliebigen Ausrichtung erlaubt.

Alternativ kann die erste Längsachse parallel versetzt zur zweiten Längsachse ausgebildet sein. Dies führt dazu, dass der Ventilkolben nicht zentrisch in der Verteilhülse angeordnet ist. Im Fall einer solchen Ausgestaltung, ist die korrekte Ausrichtung der Verteilhülse beim Einsetzen in das Gehäuse zu gewährleisten. Beispielsweise können bei Komponenten mit kreisförmigen Querschnitten Zentrier- oder Ausrichtungselemente eingesetzt werden, um die Ausrichtung zu gewährleisten. Alterativ können Komponenten eingesetzt werden, welche keine kreisrunden Querschnitte aufweisen.

In einer Ausführungsform ist in der Ventilkolbenbohrung mindestens eine Einlass-Umströmnut vorgesehen, welche in der Verlängerung eines Einlasskanals des mindestens einen Einlasses angeordnet ist und welche sich um den gesamten Umfang der Ventilkolbenbohrung erstreckt. Zudem sind mehrere über den Umfang verteilte Einlass-Durchgänge vorgesehen, welche sich von der Einlass-Umströmnut durch die Verteilhülse hindurch nach aussen erstrecken. Durch diese Einlass-Umströmnut wird das durch den Einlass strömende Fluid um die Verteilhülse verteilt und kann durch die Einlass-Durchgänge zum Ventilkolben strömen. Die Einlass-Durchgänge können gleichmässig verteilt über den Umfang der Einlass-Umströmnut angeordnet sein und sie können identisch ausgebildet sein. Beispielsweise sind die Einlass-Durchgänge radiale Bohrungen, deren Mittelachsen die zweite Längsachse des Ventilkolbens schneiden. Alternativ können die Einlass-Durchgänge derart ausgestaltet sein, dass deren Mittalachse die zweite Längsachse nicht schneidet, d.h. dass in einer Projektion in der Richtung der zweiten Längsachse, die Verbindungslinie zwischen der äusseren Öffnung und dem Projektionspunkt der zweiten Längsachse und die Mittelachsen der Einlass-Durchgänge einen Winkel aufspannen. Unterschiedliche Einlass-Durchgänge können unter unterschiedlichen Winkeln angeordnet sein. Beispielsweise kann ein an den Einlass anschliessender Einlass-Durchgang radial angeordnet sein, d.h. der Winkel ist Null Grad und die Winkel können mit zunehmendem Abstand vom Einlass zunehmen. Die Einlass-Durchgänge können als gerade Bohrungen ausgeführt sein oder deren Durchmesser kann sich gegen das Innere der Verteilhülse hin weiten. Die Einlass-Umströmnut kann eine konstante Breite und eine konstante Tiefe aufweisen. Alternativ können die Breite und/oder die Tiefe der Einlass-Umströmnut von der gegen den Einlass gerichteten Seite zur gegenüberliegenden Seite hin ändern. D.h. sie können zu- oder abnehmen.

In einer Ausführungsform ist in der Ventilkolbenbohrung mindestens eine Auslass-Umströmnut vorgesehen, welche in der Verlängerung eines Auslasskanals des mindestens einen Auslasses angeordnet ist und welche sich um den gesamten Umfang der Ventilkolbenbohrung erstreckt. Zusätzlich sind mehrere über den Umfang verteilte Auslass-Durchgänge vorgesehen, welche sich von der Auslass-Umströmnut durch die Verteilhülse hindurch nach aussen erstrecken. Die Auslass-Umströmnut kann gleich wie die Einlass-Umströmnut ausgestaltet sein. Die Breite und/oder Tiefe der Auslass-Umströmnut können jedoch auch unterschiedlich zu denjenigen der Einlass-Umströmnut sein. Beispielsweise hat die Auslass-Umströmnut eine geringere Breite.

In einer Ausführungsform ist am äusseren Umfang der Verteilhülse eine Hülsen-Einlass-Verteilnut vorgesehen, welche in der Verlängerung des Einlasskanals des mindestens einen Einlasses angeordnet ist und welche sich um den gesamten äusseren Umfang der Verteilhülse erstreckt. Beispielsweise hat die Hülsen-Einlass-Verteilnut eine konstante Breite und eine konstante Tiefe übe den gesamten Umfang der Verteilhülse. Alternativ können die Breite und/oder die Tiefe der Hülsen-Einlass-Verteilnut von der gegen den Einlass gerichteten Seite zur gegenüberliegenden Seite hin abnehmen. Dies bewirkt eine Verringerung des Strömungsquerschnitts von der Einlassseite zur gegenüberliegenden Seite hin.

In einer Ausführungsform ist am äusseren Umfang der Verteilhülse mindestens eine Hülsen-Auslass-Verteilnut vorgesehen, welche in der Verlängerung des Auslasskanals des mindestens einen Auslasses angeordnet ist und welche sich um den gesamten äusseren Umfang der Verteilhülse erstreckt.

Die Hülsen-Auslass-Verteilnut kann gleich wie die Hülsen-Einlass-Verteilnut ausgestaltet sein. Die Breite und/oder Tiefe der Hülsen-Auslass-Verteilnut können jedoch auch unterschiedlich zu denjenigen der Hülsen-Einlass-Verteilnut sein. Beispielsweise hat die Hülsen-Auslass-Verteilnut eine geringere Breite.

In einer Ausführungsform ist in der Verteilhülsenbohrung mindestens eine Gehäuse-Einlass-Verteilnut vorgesehen, welche in der Verlängerung des Einlasskanals des mindestens einen Einlasses angeordnet ist und welche sich um den gesamten Umfang der Verteilhülsenbohrung erstreckt. Der Einlasskanal mündet in die mindestens eine Gehäuse-Einlass-Verteilnut. Die mindestens eine Gehäuse-Einlass-Verteilnut kann die gleiche Nutbreite aufweisen, wie die entsprechende Hülsen-Einlass-Verteilnut.

In einer Ausführungsform nimmt der Strömungsquerschnitt der Gehäuse-Einlass-Verteilnut von der Seite des mindestens einen Einlasses zur Seite des mindestens einen Auslasses hin ab. Die Abnahme ist symmetrisch, wenn der Auslass dem Einlass gegenüberliegend angeordnet ist. Bei einer Winkligen Anordnung von Einlass und Auslass, ist die Abnahme asymmetrisch.

In einer Ausführungsform ist die Nutbreite der Gehäuse-Einlass-Verteilnut konstant und deren Nuttiefe ändert sich entlang des Umfangs. Beispielsweise nimmt sie von der Einlassseite zur Auslassseite hin ab.

In einer Ausführungsform umfasst die mindestens eine Gehäuse-Einlass-Verteilnut, in einer zur ersten Längsachse senkrechten Ebene, bzw. in einer Projektion in der Richtung der ersten Längsachse, einen kreisrunden Umfang, der sich entlang einer dritten Längsachse erstreckt. Die dritte Längsachse ist in der Richtung des mindestens einen Einlasses, parallel versetzt zur ersten Längsachse angeordnet. Dies bewirkt eine grössere Nuttiefe auf der Seite des Einlasses und eine geringere Nuttiefe auf der dieser gegenüberliegenden Seite.

In einer Ausführungsform ist in der Verteilhülsenbohrung mindestens eine Gehäuse-Auslass-Verteilnut vorgesehen, welche in der Verlängerung des Auslasskanals des mindestens einen Auslasses angeordnet ist und welche sich um den gesamten Umfang der Verteilhülsenbohrung erstreckt. Der Auslasskanal mündet in die mindestens eine Gehäuse-Auslass-Verteilnut. Die Ausgestaltung der Gehäuse-Auslass-Verteilnut kann gleich sein wie diejenige der Gehäuse-Einlass-Verteilnut.

In einer Ausführungsform nimmt der Strömungsquerschnitt der Gehäuse-Auslass-Verteilnut von der Seite des mindestens einen Auslasses zur Seite des mindestens einen Einlasses hin ab.

In einer Ausführungsform ist die Nutbreite der Gehäuse-Auslass-Verteilnut konstant und deren Nuttiefe ändert sich entlang des Umfangs.

In einer Ausführungsform umfasst die mindestens eine Gehäuse-Auslass-Verteilnut, in einer zur Längsachse des Ventilkolbens senkrechten Ebene, einen kreisrunden Umfang, der sich entlang einer vierten Längsachse erstreckt. Die vierte Längsachse ist in der Richtung des mindestens einen Auslasses, parallel versetzt zur ersten Längsachse angeordnet. Die Gehäuse-Auslass-Verteilnut kann die gleiche Breite aufweisen wie die Gehäuse-Einlass-Verteilnut. Alternativ kann sie weniger breit oder breiter ausgestaltet sein. Der Durchmesser der Projektion der der Gehäuse-Auslass-Verteilnut in der Richtung der ersten Längsachse kann gleichgross sein, wie derjenige der Gehäuse-Einlass-Verteilnut. Alternativ kann er kleiner oder grösser sein.

In einer Ausführungsform weist die Verteilhülse einen ersten Abschnitt mit einem ersten Aussendurchmesser auf, welcher sich über einen wesentlichen Bereich der Länge der Verteilhülse erstreckt. Die Verteilhülse weist einen zweiten Abschnitt mit einem zum ersten Abschnitt kleineren zweiten Aussendurchmesser auf, welcher sich über einen Endbereich der Verteilhülse erstreckt. Durch den Durchmesserunterschied ergibt sich ein Absatz in der Form einer Kreisringfläche, welche an einer entsprechenden Fläche am Gehäuse anliegen kann und dadurch Kräfte in der Richtung der Längsachsen von der Verteilhülse auf das Gehäuse übertragen kann. Zudem ist die Fixierung der Verteilhülse durch den Absatz verbessert, wodurch eine geringere Hysterese erreichbar ist. Ausserdem lassen sich durch den Absatz Verbindungen zu internen Bohrungen einfacher gestalten. Ebenfalls kann durch den Absatz verhindert werden, dass die Verteilhülse verkehrt herum in das Gehäuse eingesetzt wird.

Die erwähnten Ausführungsformen des Proportionalventils lassen sich in beliebiger Kombination einsetzen, sofern sie sich nicht widersprechen.

### KURZE BESCHREIBUNG DER FIGUREN

Ausführungsbeispiele der vorliegenden Erfindung werden nachstehend anhand von Figuren noch näher erläutert. Diese dienen lediglich zur Erläuterung und sind nicht einschränkend auszulegen. Es zeigen
Fig. 1 einen Längsschnitt durch ein erfindungsgemässes Proportionalventil;
Fig. 2 einen Längsschnitt durch das Gehäuse der Figur 1;
Fig. 3 einen Längsschnitt durch die Verteilhülse der Figur 1; und
Fig. 4 einen Längsschnitt durch den Ventilkolben der Figur 1.

### DETAILLIERTE BESCHREIBUNG DER ERFINDUNG

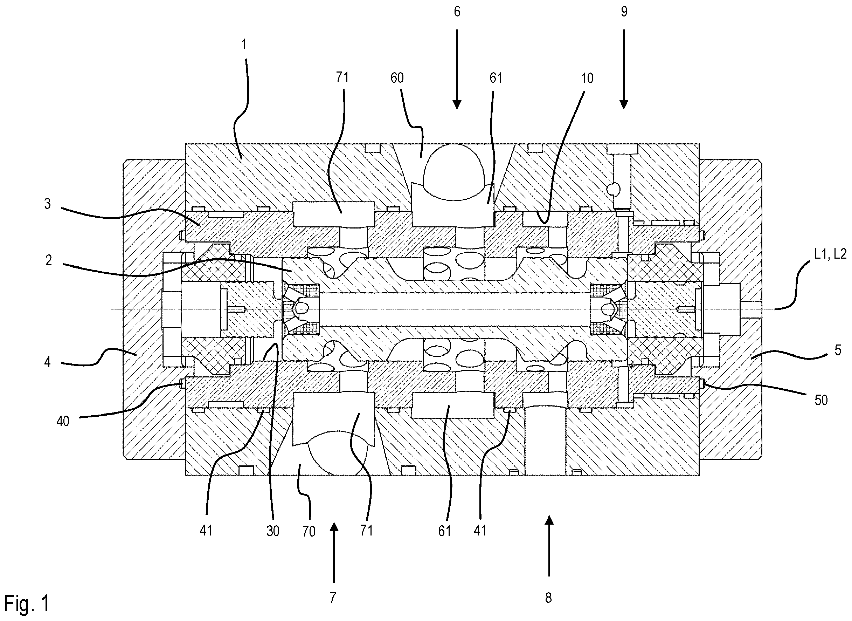

Die Figur 1 zeigt einen Längsschnitt durch ein erfindungsgemässes Proportionalventil. Das Ventil umfasst ein Gehäuse 1 mit einer Verteilhülsenbohrung 10, in welcher eine Verteilhülse 3 angeordnet ist. Die Verteilhülse 3 umfasst eine Ventilkolbenbohrung 30, in welcher ein Ventilkolben 2 angeordnet ist. Auf einer ersten Seite des Gehäuses 1, in der Verlängerung der Verteilhülsenbohrung 10, ist ein erster Gehäusedeckel 4 vorgesehen, mit welchem die Verteilhülsenbohrung 10 vollständig abdeckbar ist. Die gegenüberliegende Seite der Verteilhülsenbohrung 10 ist durch einen zweiten Gehäusedeckel 5 vollständig abdeckbar. Eine erste Stirnfläche der Verteilhülse 3 kann mit einer ersten Dichtung 40 gegen eine entsprechende Innenfläche des ersten Deckels 4 abgedichtet werden und eine zweite Stirnfläche der Ventilhülse 3 kann mit einer zweiten Dichtung 50 gegen eine entsprechende Innenfläche des zweiten Deckels 5 abgedichtet werden. Um Bereiche entlang der Verteilhülse 3 voneinander fluidtechnisch zu trennen, sind dritte Dichtungen 41 vorgesehen, welche sich um den entsprechenden Umfang der Verteilhülse 3 erstrecken. Im Gehäuse 1 ist ein Einlass 6 mit einem Einlasskanal 60 vorgesehen, welcher in einen Einlass-Verteilkanal 61 mündet, welcher sich um den Umfang der Verteilhülse 3 erstreckt. Ein äusserer Teil des Einlass-Verteilkanals 61 wird durch eine Nut im Gehäuse 1 begrenzt und ein innerer Teil durch eine Nut in der Verteilhülse 3. Im Gehäuse 1 ist ein erster Auslass 7 mit einem Auslasskanal 70 vorgesehen, welcher in einen Auslass-Verteilkanal 71 mündet, welcher sich um den Umfang der Verteilhülse 3 erstreckt. Ein äusserer Teil des Auslass-Verteilkanals 71 wird durch eine Nut im Gehäuse 1 begrenzt und ein innerer Teil durch eine Nut in der Verteilhülse 3. Im Gehäuse 1 ist ein zweiter Auslass 8 vorgesehen, welcher in einen entsprechenden Verteilkanal mündet, welcher sich um den Umfang der Verteilhülse 3 erstreckt. Dieser Verteilkanal wird aussen durch die Verteilhülsenbohrung 10 begrenzt und innen durch eine Nut in der Verteilhülse 3. Im Gehäuse 1 ist weiter ein Steuerdruckanschluss 9 vorgesehen. Die Begriffe Einlass und Auslass sind nicht einschränkend zu verstehen und dienen lediglich dazu, die unterschiedlichen Anschlüsse voneinander zu unterscheiden. Selbstverständlich könnte der als Einlass bezeichnete Anschluss auch als Auslass dienen und der als Auslass bezeichnete Anschluss als Einlass. Es ist auch möglich, dass ein Anschluss, je nach Verwendung, wahlweise als Einlass oder als Auslass dient.

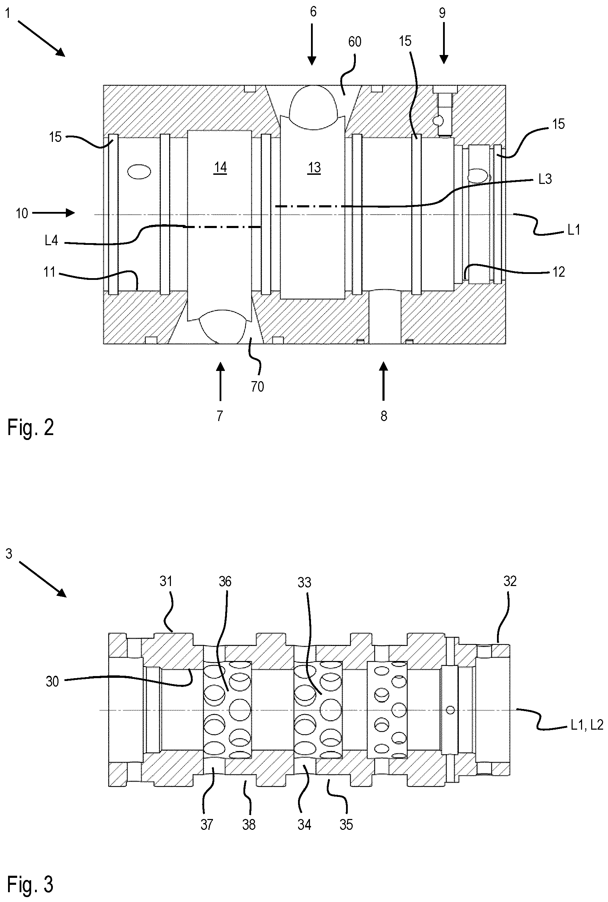

Die Figur 2 zeigt einen Längsschnitt durch das Gehäuse 1 der Figur 1. Die Verteilhülsenbohrung 10 erstreckt sich entlang einer ersten Längsachse L1 von einer ersten Seite durch das ganze Gehäuse 1 hindurch zu einer zweiten Seite. Die Verteilhülsenbohrung 10 umfasst einen ersten Abschnitt 11 mit einem ersten Durchmesser, welcher sich von der ersten Gehäuseseite über einen wesentlichen Bereich der Bohrung erstreckt und sie umfasst einen zweiten Abschnitt 12 mit einem dazu kleineren zweiten Durchmesser, der sich von der zweiten Gehäuseseite über einen endnahen Bereich erstreckt. Der Einlass 6 ist in einem mittennahen Bereich des Gehäuses 1 ausgebildet. Der Strömungsquerschnitt des Einlasskanals 60 verjüngt sich vom Gehäuseäussern nach innen. Der Einlasskanal 60 mündet in eine Gehäuse-Einlass-Verteilnut 13. Die Gehäuse-Einlass-Verteilnut 13 hat in einer Projektion in der Richtung der ersten Längsachse L1 einen kreisrunden Querschnitt und sie erstreckt sich entlang einer dritten Längsachse L3, welche in der Richtung des Einlasses 6 parallel versetzt zur ersten Längsachse L1 verläuft. Dementsprechend ist die Tiefe der in der Verteilhülsenbohrung 10 ausgebildeten Gehäuse-Einlass-Verteilnut 13 grösser auf der Seite des Einlasses 6 als auf der dieser gegenüberliegenden Seite. Die Nuttiefe nimmt von der Einlassseite zur gegenüberliegenden Seite kontinuierlich ab. Der erste Auslass 7 ist zur ersten Gehäuseseite hin versetzt zum Einlass 6 ausgebildet. Der Strömungsquerschnitt des Auslasskanals 70 verjüngt sich vom Gehäuseäussern nach innen. Der Auslasskanal 70 mündet in eine Gehäuse-Auslass-Verteilnut 14. Die Gehäuse-Auslass-Verteilnut 14 hat in einer Projektion in der Richtung der ersten Längsachse L1 einen kreisrunden Querschnitt und sie erstreckt sich entlang einer vierten Längsachse L4, welche in der Richtung des ersten Auslasses 7 parallel versetzt zur ersten Längsachse L1 verläuft. Dementsprechend ist die Tiefe der in der Verteilhülsenbohrung 10 ausgebildeten Gehäuse-Auslass-Verteilnut 14 grösser auf der Seite des ersten Auslasses 7 als auf der dieser gegenüberliegenden Seite. Die Nuttiefe nimmt von der Auslassseite zur gegenüberliegenden Seite kontinuierlich ab. Der zweite Auslass 8 ist zur zweiten Gehäuseseite hin versetzt zum Einlass 6 ausgebildet. Der Auslasskanal des zweiten Auslasses 8 ist als gerade Bohrung mit konstantem Strömungsquerschnitt ausgebildet und mündet in die Verteilhülsenbohrung 10. Zwischen dem Einlassbereich und den Bereichen der Auslässe, sowie in den Bereichen ausserhalb der Auslässe, sind Dichtungsnuten 15 vorgesehen, in welchen beispielsweise O-Ringe angeordnet werden können.

Die Figur 3 zeigt einen Längsschnitt durch die Verteilhülse 3 der Figur 1. Die Verteilhülse 3 umfasst einen ersten Abschnitt 31 mit einem ersten Durchmesser und einen zweiten Abschnitt 32 mit einem zweiten Durchmesser, welche passend mit den entsprechenden Abschnitten der Verteilhülsenbohrung 10 ausgebildet sind. Die Ventilkolbenbohrung 30 erstreckt sich entlang einer zweiten Längsachse L2 von einer ersten Seite zu einer dieser gegenüberliegenden zweiten Seite. Die Ventilkolbenbohrung 30 ist zentrisch in der Verteilhülse 3 ausgebildet. Da sich die Aussenseite der Verteilhülse 3 entlang der ersten Längsachse L1 erstreckt und die Ventilkolbenbohrung 30 entlang der zweiten Längsachse L2, sind diese beiden Achsen kollinear. Im Bereich des Einlasses ist eine Einlass-Umströmnut 33 vorgesehen, welche sich mit konstanter Breite und konstanter Tiefe um den gesamten Umfang der Ventilkolbenbohrung 30 erstreckt. Im ersten Abschnitt 31 der Verteilhülse 3 ist auf deren Aussenseite im Bereich des Einlasses eine Hülsen-Einlass-Verteilnut 35 vorgesehen, welche sich mit konstanter Breite und konstanter Tiefe um deren gesamten Umfang erstreckt. Die Breite und Tiefe der Hülsen-Einlass-Verteilnut 35 sind grösser als diejenigen der Einlass-Umströmnut 33. Einlass-Durchgänge 34 verbinden die Einlass-Umströmnut 33 mit der Hülsen-Einlass-Verteilnut 35. Die Einlass-Durchgänge 34 sind radiale Bohrungen, welche gleichmässig verteilt über den Umfang angeordnet sind. Der Durchmesser der Einlass-Durchgänge 34 entspricht etwa der halben Breite der Einlass-Umströmnut 33. Im Bereich des ersten Auslasses ist eine Auslass-Umströmnut 36 vorgesehen, welche sich mit konstanter Breite und konstanter Tiefe um den gesamten Umfang der Ventilkolbenbohrung 30 erstreckt. Im ersten Abschnitt 31 der Verteilhülse 3 ist auf deren Aussenseite im Bereich des ersten Auslasses eine Hülsen-Auslass-Verteilnut 38 vorgesehen, welche sich mit konstanter Breite und konstanter Tiefe um deren gesamten Umfang erstreckt. Die Breite und Tiefe der Hülsen-Auslass-Verteilnut 38 sind grösser als diejenigen der Auslass-Umströmnut 36. Auslass-Durchgänge 37 verbinden die Auslass-Umströmnut 36 mit der Hülsen-Auslass-Verteilnut 38. Die Auslass-Durchgänge 37 sind radiale Bohrungen, welche gleichmässig verteilt über den Umfang angeordnet sind. Der Durchmesser der Auslass-Durchgänge 37 entspricht etwa der halben Breite der Auslass-Umströmnut 36. Die Abmessungen der Nuten und Durchgänge beim ersten Auslass entsprechen im Wesentlichen denjenigen beim Einlass. Die Nuttiefen beim zweiten Auslass entsprechen im Wesentlichen denjenigen beim ersten Auslass. Die Nuten beim zweiten Auslass sind jedoch weniger breit und die Durchmesser der Durchgänge sind kleiner.

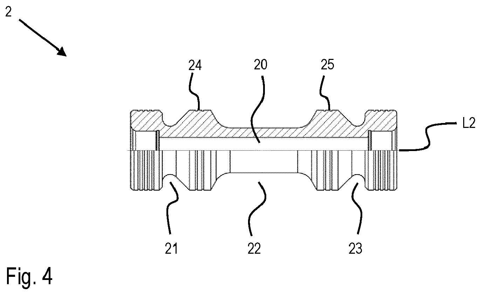

Die Figur 4 zeigt einen Längsschnitt durch den Ventilkolben 2 der Figur 1. Der Ventilkolben 2 erstreckt sich entlang der zweiten Längsachse L2 und sein Aussendurchmesser ist verschiebbar passend zum Innendurchmesser der Ventilkolbenbohrung der Verteilhülse. Eine Durchgangsbohrung 20 erstreckt sich entlang der zweiten Längsachse durch den Ventilkolben 2 hindurch. Eine erste Kolben-Umströmnut 21 ist beabstandet zu einer ersten Seite des Ventilkolbens 2 ausgebildet und erstreckt sich um dessen gesamten Umfang. Eine Kolben-Überströmnut 22 ist in einem mittigen Bereich des Ventilkolbens 2 ausgebildet und erstreckt sich um dessen gesamten Umfang. Die Kolben-Überströmnut 22 ist durch einen ersten Steg 24 von der ersten Kolben-Umströmnut 21 getrennt. Eine zweite Kolben-Umströmnut 23 ist beabstandet zu einer zweiten Seite des Ventilkolbens 2 ausgebildet und erstreckt sich um dessen gesamten Umfang. Die zweite Kolben-Umströmnut 23 ist durch einen zweiten Steg 25 von der Kolben-Überströmnut 22 getrennt. Der Aussendurchmesser der Stege und der Randbereiche des Ventilkolbens 2 entsprechen dem Innendurchmesser der Ventilkolbenbohrung der Verteilhülse.

**BEZUGSZEICHENLISTE**

| | | | |
|---|---|---|---|
| 1 | Gehäuse | 34 | Einlass-Durchgang |
| 10 | Verteilhülsenbohrung | 35 | Hülsen-Einlass-Verteilnut |
| 11 | erster Abschnitt | | |
| 12 | zweiter Abschnitt | 36 | Auslass-Umströmnut |
| 13 | Gehäuse-Einlass-Verteilnut | 37 | Auslass-Durchgang |
| | | 38 | Hülsen-Auslass-Verteilnut |
| 14 | Gehäuse-Auslass-Verteilnut | | |
| | | 4 | erster Gehäusedeckel |
| 15 | Dichtungsnut | 40 | erste Dichtung |
| 2 | Ventilkolben | 41 | dritte Dichtung |
| 20 | Durchgangsbohrung | 5 | zweiter Gehäusedeckel |
| 21 | erste Kolben-Umströmnut | 50 | zweite Dichtung |
| | | 6 | Einlass |
| 22 | Kolben-Überströmnut | 60 | Einlasskanal |
| 23 | zweite Kolben-Umströmnut | 61 | Einlass-Verteilkanal |
| | | 7 | erster Auslass |
| 24 | erster Steg | 70 | Auslasskanal |
| 25 | zweiter Steg | 71 | Auslass-Verteilkanal |
| 3 | Verteilhülse | 8 | zweiter Auslass |
| 30 | Ventilkolbenbohrung | 9 | Steuerdruckanschluss |
| 31 | erster Abschnitt | | |
| 32 | zweiter Abschnitt | L1-L4 | Längsachse |
| 33 | Einlass-Umströmnut | | |

## Patentansprüche

1. Ein Proportionalventil mit einem Gehäuse (1) mit mindestens einem Einlass (6) und mindestens einem Auslass (7;8) und mit einem Ventilkolben (2), welcher sich entlang einer zweiten Längsachse (L2) erstreckt, wobei der mindestens eine Einlass (6) durch ein entsprechendes Positionieren des Ventilkolbens (2) fluidtechnisch mit dem mindestens einen Auslass (7;8) verbindbar ist oder wobei der Ventilkolben (2) deren Verbindung unterbrechen kann, **dadurch gekennzeichnet, dass** im Gehäuse (1) eine Verteilhülsenbohrung (10) vorgesehen ist, welche sich entlang einer ersten Längsachse (L1) erstreckt und in welcher passend eine Verteilhülse (3) angeordnet ist, in welcher Verteilhülse (3) eine Ventilkolbenbohrung (30) vorgesehen ist, in welcher der Ventilkolben (2) passend angeordnet und darin axial verschiebbar ist, und wobei die erste Längsachse (L1) parallel zur zweiten Längsachs (L2) ausgebildet ist.

2. Das Proportionalventil gemäss Anspruch 1, wobei die erste Längsachse (L1) kollinear mit der zweiten Längsachse (L2) ausgebildet ist.

3. Das Proportionalventil gemäss Anspruch 1 oder 2, wobei in der Ventilkolbenbohrung (30) mindestens eine Einlass-Umströmnut (33) vorgesehen ist, welche in der Verlängerung eines Einlasskanals (60) des mindestens einen Einlasses (6) angeordnet ist und welche sich um den gesamten Umfang der Ventilkolbenbohrung (30) erstreckt und wobei mehrere über den Umfang verteilte Einlass-Durchgänge (34) vorgesehen sind, welche sich von der Einlass-Umströmnut (33) durch die Verteilhülse (3) hindurch nach aussen erstrecken.

4. Das Proportionalventil gemäss einem der vorangehenden Ansprüche, wobei in der Ventilkolbenbohrung (30) mindestens eine Auslass-Umströmnut (36) vorgesehen ist, welche in der Verlängerung eines Auslasskanals (70) des mindestens einen Auslasses (7;8) angeordnet ist und welche sich um den gesamten Umfang der Ventilkolbenbohrung (30) erstreckt und wobei mehrere über den Umfang verteilte Auslass-Durchgänge (37) vorgesehen sind, welche sich von der Auslass-Umströmnut (36) durch die Verteilhülse (3) hindurch nach aussen erstrecken.

5. Das Proportionalventil gemäss einem der vorangehenden Ansprüche, wobei am äusseren Umfang der Verteilhülse (3) eine Hülsen-Einlass-Verteilnut (35) vorgesehen ist, welche in der Verlängerung des Einlasskanals (60) des mindestens einen Einlasses (6) angeordnet ist und welche sich um den gesamten äusseren Umfang der Verteilhülse (3) erstreckt.

6. Das Proportionalventil gemäss einem der vorangehenden Ansprüche, wobei am äusseren Umfang der Verteilhülse (3) mindestens eine Hülsen-Auslass-Verteilnut (38) vorgesehen ist, welche in der Verlängerung des Auslasskanals (70) des mindestens einen Auslasses (7;8) angeordnet ist und welche sich um den gesamten äusseren Umfang der Verteilhülse (3) erstreckt.

7. Das Proportionalventil gemäss einem der vorangehenden Ansprüche, wobei in der Verteilhülsenbohrung (10) mindestens eine Gehäuse-Einlass-Verteilnut (13) vorgesehen ist, welche in der Verlängerung des Einlasskanals (60) des mindestens einen Einlasses (6) angeordnet ist und welche sich um den gesamten Umfang der Verteilhülsenbohrung (10) erstreckt, und wobei der Einlasskanal (60) in die mindestens eine Gehäuse-Einlass-Verteilnut (13) mündet.

8. Das Proportionalventil gemäss Anspruch 7, wobei der Strömungsquerschnitt der Gehäuse-Einlass-Verteilnut (13) von der Seite des mindestens einen Einlasses (6) zur Seite des mindestens einen Auslasses (7;8) hin abnimmt.

9. Das Proportionalventil gemäss Anspruch 8, wobei die Nutbreite der Gehäuse-Einlass-Verteilnut (13) konstant ist und sich deren Nuttiefe entlang des Umfangs ändert.

10. Das Proportionalventil gemäss einem der Ansprüche 7 bis 9, wobei die mindestens eine Gehäuse-Einlass-Verteilnut (13), in einer zur ersten Längsachse (L1) senkrechten Ebene, einen kreisrunden Umfang umfasst, der sich entlang einer dritten Längsachse (L3) erstreckt, welche in der Richtung des mindestens einen Einlasses (6), parallel versetzt zur ersten Längsachse (L1) angeordnet ist.

11. Das Proportionalventil gemäss einem der vorangehenden Ansprüche, wobei in der Verteilhülsenbohrung (10) mindestens eine Gehäuse-Auslass-Verteilnut (14) vorgesehen ist, welche in der Verlängerung des Auslasskanals (70) des mindestens einen Auslasses (7) angeordnet ist und welche sich um den gesamten Umfang der Verteilhülsenbohrung (10) erstreckt, und wobei der Auslasskanal (70) in die mindestens eine Gehäuse-Auslass-Verteilnut (14) mündet.

12. Das Proportionalventil gemäss Anspruch 11, wobei der Strömungsquerschnitt der Gehäuse-Auslass-Verteilnut (14) von der Seite des mindestens einen Auslasses (7) zur Seite des mindestens einen Einlasses (6) hin abnimmt.

13. Das Proportionalventil gemäss Anspruch 12, wobei die Nutbreite der Gehäuse-Auslass-Verteilnut (14) konstant ist und sich deren Nuttiefe entlang des Umfangs ändert.

14. Das Proportionalventil gemäss einem der Ansprüche 11 bis 13, wobei die mindestens eine Gehäuse-Auslass-Verteilnut (14), in einer zur Längsachse des Ventilkolbens (2) senkrechten Ebene, einen kreisrunden Umfang umfasst, der sich entlang einer vierten Längsachse (L4) erstreckt, welche in der Richtung des mindestens einen Auslasses (7), parallel versetzt zur ersten Längsachse (L1) angeordnet ist.

15. Das Proportionalventil gemäss einem der vorangehenden Ansprüche, wobei die Verteilhülse (3) einen ersten Abschnitt (31) mit einem ersten Aussendurchmesser aufweist, welcher sich über einen wesentlichen Bereich der Länge der Verteilhülse (3) erstreckt und einen zweiten Abschnitt (32) mit einem zum ersten Abschnitt (31) kleineren zweiten Aussendurchmesser aufweist, welcher sich über einen Endbereich der Verteilhülse (3) erstreckt.
